# EUROPEAN PATENT SPECIFICATION

(11) **EP 4 053 202 B1**
(45) Date of publication and mention of the grant of the patent: **04.12.2024**
(21) Application number: 20881218.0
(22) Date of filing: 24.09.2020
(51) Int. Cl.: C08K 5/5313, C08K 5/5353, C08K 5/03, C08L 53/00, C08L 23/12, C08L 23/16

(54) **THERMOPLASTIC RESIN COMPOSITION AND MOLDED PRODUCT MANUFACTURED THEREFROM**
THERMOPLASTISCHE HARZZUSAMMENSETZUNG UND DARAUS HERGESTELLTES FORMPRODUKT
COMPOSITION DE RÉSINE THERMOPLASTIQUE ET PRODUIT MOULÉ FABRIQUÉ À PARTIR DE CELLE-CI

(30) Priority: 31.10.2019 KR 20190137273
(43) Date of publication of application: 07.09.2022
(73) Proprietor: Lotte Chemical Corporation, Seoul, 05551 (KR)
(72) Inventor: PARK, Jee Kwon, Uiwang-Si Gyeonggi-do 16073 (KR); JEONG, Hyeon Mun, Uiwang-Si Gyeonggi-do 16073 (KR); KIM, Yoen Kyoung, Uiwang-Si Gyeonggi-do 16073 (KR); LEE, Seon Ae, Uiwang-Si Gyeonggi-do 16073 (KR)
(74) Representative: Germain Maureau
(86) International application number: PCT/KR2020/013019
(87) International publication number: WO 2021/085868

(56) References cited:
- JP-A- 2018 154 697
- KR-A- 19980 069 435
- KR-A- 20030 054 090
- KR-A- 20150 145 016
- KR-A- 20170 002 370
- US-A1- 2009 131 559
- DATABASE WPI Week 201919, Derwent World Patents Index; AN 2019-104354, XP002810364
- DATABASE WPI Week 200653, Derwent World Patents Index; AN 2006-517812, XP002810365

## Description

### [Technical Field]

The present invention relates to a thermoplastic resin composition and a molded product produced therefrom. More particularly, the present invention relates to a thermoplastic resin composition that exhibits good properties in terms of flame retardancy, impact resistance, and the like, and a molded product produced therefrom.

### [Background Art]

A polypropylene resin has good properties in terms of chemical resistance, weather resistance, and processability to be easily produced into injection-molded products, films, and blow-molded products, and is widely applied to automobiles, building materials, electric parts, and the like.

Since the polypropylene resin is flammable due to the chemical structure thereof, various organic or inorganic flame retardants are added together in order to impart flame retardancy. However, with increasing interest in environmental issues, regulation on existing halogen-based flame retardants has been gradually strengthened. In order to use thermoplastic resin compositions as eco-friendly materials, there is a need for reduction or exclusion of the halogen-based flame retardants.

However, thermoplastic resin compositions prepared using a non-halogen-based flame retardant alone have a problem of significant deterioration in flame retardancy, as compared to thermoplastic resin compositions prepared using a halogen-based flame retardant. Moreover, use of an excess of a flame retardant for improvement in flame retardancy of the thermoplastic resin compositions can cause deterioration in mechanical properties.

Therefore, there is a need for development of a thermoplastic resin composition that exhibits good properties in terms of flame retardancy, impact resistance, balance therebetween, and the like.

The background technique of the present invention is disclosed in Korean Patent Registration No. 10-1863421 and the like.

### [Disclosure]

### [Technical Problem]

It is one object of the present invention to provide a thermoplastic resin composition having good properties in terms of flame retardancy, impact resistance, and the like.

It is another object of the present invention to provide a molded product produced from the thermoplastic resin composition.

The above and other objects of the present invention can be achieved by the present invention described below.

### [Technical Solution]

1. One aspect of the present invention relates to a thermoplastic resin composition. The thermoplastic resin composition includes: about 100 parts by weight of an ethylene-propylene block copolymer; about 0.3 parts by weight to about 5 parts by weight of a metal phosphinate compound; about 0.5 parts by weight to about 5 parts by weight of a phosphorus nitrogen-based flame retardant; and about 0.01 parts by weight to about 0.2 parts by weight of a bromine-based flame retardant.
2. In embodiment 1, the ethylene-propylene block copolymer may include about 20% by weight (wt%) to about 60 wt% of ethylene and about 40 wt% to about 80 wt% of propylene.
3. In embodiment 1 or 2, the ethylene-propylene block copolymer may include about 60 wt% to about 95 wt% of a propylene homopolymer and about 5 wt% to about 40 wt% of a rubbery ethylene-propylene copolymer.
4. In embodiments 1 to 3, the ethylene-propylene block copolymer may have a melt-flow index (MI) of about 5 g/10 min to about 100 g/10 min, as measured under conditions of 230°C and 2.16 kgf in accordance with ASTM D1238.
5. In embodiments 1 to 4, the metal phosphinate compound may be represented by Formula 1: 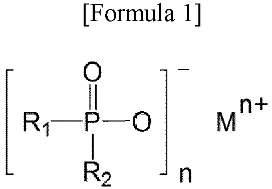 where R₁ and R₂ are each independently a C₁ to C₆ alkyl group or a C₆ to C₁₂ aryl group; M is Al, Zn, Mg, Ca, Sb, Sn, Ge, Ti, Fe, Zr, Ce, Bi, Sr, Mn, Li, or Na; and n is an integer of 1 to 4.
6. In embodiments 1 to 5, the phosphorus nitrogen-based flame retardant may include at least one of melamine polyphosphate, melam pyrophosphate, melem pyrophosphate, melon pyrophosphate, melamine pyrophosphate, dimelamine pyrophosphate, melamine polyphosphate, melam polyphosphate, melon polyphosphate, melem polyphosphate, mixed multi-salts thereof, ammonium hydrogen phosphate, ammonium dihydrogen phosphate, and ammonium polyphosphate.
7. In embodiments 1 to 6, the bromine-based flame retardant may include at least one selected of tetrabromobisphenol-A bis(2,3-dibromopropyl ether), tetrabromobisphenol-A, decabromodiphenyl oxide, decabromodiphenyl ether, 1,2-bis(2,4,6-tribromophenyl)ethane, octabromo-1,3,3-trimethyl-1-phenylindane, and 2,4,6-tris(2,4,6-tribromophenoxy)-1,3,5-triazine.
8. In embodiments 1 to 7, the metal phosphinate compound and the phosphorus nitrogen-based flame retardant may be present in a weight ratio of about 1:0.2 to about 1:5.
9. In embodiments 1 to 8, the metal phosphinate compound and the bromine-based flame retardant may be present in a weight ratio of about 1:0.01 to about 1:0.6.
10. In embodiments 1 to 9, the phosphorus nitrogen-based flame retardant and the bromine-based flame retardant may be present in a weight ratio of about 1:0.01 to about 1:0.4.
11. In embodiments 1 to 10, the thermoplastic resin composition may have a flame retardancy of V-2, as measured on a 1.5 mm thick injection-molded specimen in accordance with a UL-94 vertical test method.
12. In embodiments 1 to 11, the thermoplastic resin composition may have a glow wire ignitability temperature (GWIT) of about 730°C or more and a glow wire flammability index (GWFI) of about 870°C or more, as measured on a specimen having a size of 100 mm × 100 mm × 1.5 mm in accordance with UL746A.
13. In embodiments 1 to 12, the thermoplastic resin composition may have a halogen content of about 100 ppm to about 900 ppm in a 15 mg specimen, as measured by ion chromatography in accordance with KS C IEC 62321-3-2.
14. In embodiments 1 to 13, the thermoplastic resin composition may have a notched Izod impact strength of about 7 kgf·cm/cm to about 30 kgf·cm/cm, as measured on a 6.4 mm thick specimen in accordance with ASTM D256.
15. Another aspect of the present invention relates to a molded product. The molded product is produced from the thermoplastic resin composition according to any one of embodiments 1 to 14.

### [Advantageous Effects]

The present invention provides a thermoplastic resin composition having good properties in terms of flame retardancy, impact resistance, and the like, and a molded product produced therefrom.

### [Best Mode]

Hereinafter, embodiments of the present invention will be described in detail.

A thermoplastic resin composition according to the present invention includes: (A) an ethylene-propylene block copolymer; (B) a phosphinate compound; (C) a phosphorus nitrogen-based flame retardant; and (D) a bromine-based flame retardant.

As used herein to represent a specific numerical range, the expression "a to b" means "≥ a and ≤ b".

### (A) Ethylene-propylene block copolymer

According to the present invention, the ethylene-propylene block copolymer is lightweight and has good mechanical properties, and may be selected from any ethylene-propylene block copolymers (block polypropylene) for typical thermoplastic resin compositions. For example, the ethylene-propylene block copolymer may be obtained through sequential polymerization of a propylene homopolymerization part and an ethylene-propylene copolymerization part in a reactor.

In some embodiments, the ethylene-propylene block copolymer may include about 20 wt% to about 60 wt%, for example, about 30 wt% to about 50 wt%, of ethylene and about 40 wt% to about 80 wt%, for example, about 50 wt% to about 70 wt%, of propylene. Within this range, the thermoplastic resin composition can have good moldability, good impact resistance, and the like.

In some embodiments, the ethylene-propylene block copolymer may include about 60 wt% to about 95 wt%, for example, about 70 wt% to about 90 wt%, of a propylene homopolymer, which is present in a continuous phase (matrix), and about 5 wt% to about 40 wt%, for example, about 10 wt% to about 30 wt%, of an ethylene-propylene copolymer, which is a rubber component present in a dispersed phase. Within this range, the thermoplastic resin composition can have good rigidity, good impact resistance, and the like.

In some embodiments, the ethylene-propylene block copolymer may have a melt-flow index (MI) of about 5 g/10 min to about 100 g/10 min, for example, about 15 g/10 min to about 50 g/10 min, as measured under conditions of 230°C and 2.16 kgf in accordance with ASTM D1238. Within this range, the thermoplastic resin composition can have good impact resistance and the like.

### (C) Metal phosphinate compound

According to the present invention, the metal phosphinate compound can improve flame retardancy and heat resistance of the ethylene-propylene block copolymer (thermoplastic resin) composition even with a small amount together with the phosphorus nitrogen-based flame retardant and the bromine-based flame retardant, and may be a compound represented by Formula 1. 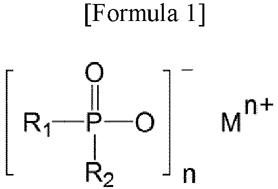 where R₁ and R₂ are each independently a C₁ to C₆ alkyl group or a C₆ to C₁₂ aryl group; M is Al, Zn, Mg, Ca, Sb, Sn, Ge, Ti, Fe, Zr, Ce, Bi, Sr, Mn, Li, or Na; and n is an integer of 1 to 4.

In some embodiments, the metal phosphinate compound may be aluminum diethyl phosphinate or zinc diethyl phosphinate.

In some embodiments, the metal phosphinate compound may be present in an amount of about 0.3 parts by weight to about 5 parts by weight, for example, about 0.5 parts by weight to about 4 parts by weight, relative to about 100 parts by weight of the ethylene-propylene block copolymer. If the content of the metal phosphinate compound is less than about 0.3 parts by weight relative to about 100 parts by weight of the ethylene-propylene block copolymer, the thermoplastic resin composition can suffer from deterioration in flame retardancy and the like, and if the content of the metal phosphinate compound exceeds about 5 parts by weight, the thermoplastic resin composition can suffer from deterioration in impact resistance and the like.

### (C) Phosphorus nitrogen-based flame retardant

According to the present invention, the phosphorus nitrogen-based flame retardant can improve flame retardancy of the ethylene-propylene block copolymer (thermoplastic resin) composition even with a small amount together with the metal phosphinate compound and the bromine-based flame retardant, and may be selected from any phosphorus nitrogen-based flame retardants for typical thermoplastic resin compositions.

In some embodiments, the phosphorus nitrogen-based flame retardant may include at least one of melamine polyphosphate, melam pyrophosphate, melem pyrophosphate, melon pyrophosphate, melamine pyrophosphate, dimelamine pyrophosphate, melamine polyphosphate, melam polyphosphate, melon polyphosphate, melem polyphosphate, mixed multi-salts thereof, ammonium hydrogen phosphate, ammonium dihydrogen phosphate, and ammonium polyphosphate. For example, the phosphorus nitrogen-based flame retardant may include melamine polyphosphate, ammonium polyphosphate, and the like.

In some embodiments, the phosphorus nitrogen-based flame retardant may be present in an amount of about 0.5 parts by weight to about 5 parts by weight, for example, about 1 part by weight to about 4 parts by weight, relative to about 100 parts by weight of the ethylene-propylene block copolymer. If the content of the phosphorus nitrogen-based flame retardant is less than about 0.5 parts by weight relative to about 100 parts by weight of the ethylene-propylene block copolymer, the thermoplastic resin composition can suffer from deterioration in flame retardancy and the like, and if the content of the phosphorus nitrogen-based flame retardant exceeds about 5 parts by weight, the thermoplastic resin composition can suffer from deterioration in impact resistance and the like.

In some embodiments, the metal phosphinate compound (B) and the phosphorus nitrogen-based flame retardant (C) may be present in a weight ratio (B:C) of about 1:0.2 to about 1:5, for example, about 1:0.3 to about 1:4. Within this range, the thermoplastic resin composition can have better properties in terms of flame retardancy, impact resistance, and the like.

### (D) Bromine-based flame retardant

According to the present invention, the bromine-based flame retardant can improve flame retardancy of the ethylene-propylene block copolymer (thermoplastic resin) composition even with a small amount together with the metal phosphinate compound and the phosphorus nitrogen-based flame retardant, and may be selected from any bromine-based flame retardants for typical thermoplastic resin compositions.

In some embodiments, the bromine-based flame retardant may include tetrabromo bisphenol-A bis(2,3-dibromopropyl ether), tetrabromo bisphenol-A, decabromodiphenyl oxide, decabrominated diphenyl ethane, 1,2-bis(2,4,6-tribromophenyl)ethane, octabromo-1,3,3-trimethyl-1-phenylindane, and 2,4,6-tris(2,4,6-tribromophenoxy)-1,3,5-triazine, combinations thereof, and the like.

In some embodiments, the bromine-based flame retardant may be present in an amount of about 0.01 parts by weight to about 0.2 parts by weight, for example, about 0.05 parts by weight to about 0.13 parts by weight, relative to about 100 parts by weight of the ethylene-propylene block copolymer. If the content of the bromine-based flame retardant is less than about 0.01 parts by weight relative to about 100 parts by weight of the ethylene-propylene block copolymer, the thermoplastic resin composition can suffer from deterioration in flame retardancy and the like, and if the content of the bromine-based flame retardant exceeds about 0.2 parts by weight, the thermoplastic resin composition has a bromine content of greater than 900 ppm, which does not satisfy international environment regulations (RoHS (Restriction of Hazardous Substances)), and can suffer from deterioration in impact resistance and the like.

In some embodiments, the metal phosphinate compound (B) and the bromine-based flame retardant (D) may be present in a weight ratio (B:D) of about 1:0.01 to about 1:0.6, for example, about 1:0.02 to about 1:0.5. Within this range, the thermoplastic resin composition can have better flame retardancy and the like.

In some embodiments, the phosphorus nitrogen-based flame retardant (C) and the bromine-based flame retardant (D) may be present in a weight ratio (C:D) of about 1:0.01 to about 1:0.4, for example, about 1:0.02 to about 1:0.1. Within this range, the thermoplastic resin composition can have better flame retardancy and the like and satisfy the RoHS international environment regulations.

According to one embodiment of the present invention, the thermoplastic resin composition may further include additives for typical thermoplastic resin compositions. Examples of the additives may include impact modifiers, antioxidants, anti-dripping agents, lubricants, release agents, nucleating agents, antistatic agents, stabilizers, pigments, dyes, and mixtures thereof, without being limited thereto. The additives may be present in an amount of about 0.001 parts by weight to about 40 parts by weight, for example, about 0.1 parts by weight to about 10 parts by weight, relative to about 100 parts by weight of the ethylene-propylene block copolymer.

The thermoplastic resin composition according to one embodiment may be prepared in pellet form by mixing the aforementioned components, followed by melt extrusion at about 180°C to about 280°C, for example, about 200°C to about 260°C, using a typical twin-screw extruder.

In some embodiments, the thermoplastic resin composition may have a flame retardancy of V-2 or more, as measured on a 1.5 mm thick injection-molded specimen in accordance with a UL-94 vertical test method.

In some embodiments, the thermoplastic resin composition may have a glow wire ignitability temperature (GWIT) of about 730°C or more, for example, about 750°C to about 800°C, and a glow wire flammability index (GWFI) of about 870°C or more, for example, about 900°C to about 960°C, as measured on a specimen having a size of 100 mm × 100 mm × 1.5 mm in accordance with UL746A.

In some embodiments, the thermoplastic resin composition may have a halogen content of about 100 ppm to about 900 ppm, for example, about 200 ppm to about 850 ppm, in a 15 mg specimen, as measured by ion chromatography in accordance with KS C IEC 62321-3-2.

In some embodiments, the thermoplastic resin composition may have a notched Izod impact strength of about 7 kgf·cm/cm to about 30 kgf·cm/cm, for example, about 8 kgf·cm/cm to about 20 kgf·cm/cm, as measured on a 6.4 mm thick specimen in accordance with ASTM D256.

A molded product according to the present invention is produced from the thermoplastic resin composition as set forth above. The thermoplastic resin composition may be prepared in pellet form. The prepared pellets may be produced into various molded products (articles) by various molding methods, such as injection molding, extrusion molding, vacuum molding, and casting. These molding methods are well known to those skilled in the art. The molded products may be produced by vacuum molding and have good properties in terms of flame retardancy, impact resistance, and balance therebetween. In addition, the molded products have a halogen content of 900 ppm, which satisfies the RoHS international environment regulations, and thus can be advantageously used in various electric and/or electronic components, particularly connector components.

### [Mode for Invention]

Next, the present invention will be described in more detail with reference to some examples.

### EXAMPLE

Details of components used in Examples and Comparative Examples are as follows.
(A) Thermoplastic resin
   (A1) Ethylene-propylene block copolymer (Manufacturer: Lotte Chemical Co., Ltd., Product Name: JH-370A, Melt-flow index (MI): 35 g/10 min)
   (A2) Polypropylene resin (Manufacturer: Lotte Chemical Co., Ltd., Product Name: H1500, Melt-flow index (MI): 12 g/10 min)
   (A3) Ethylene-propylene random copolymer (Manufacturer: Lotte Chemical Co., Ltd., Product Name: J-560S, Melt-flow index (MI): 20 g/10 min)
(B) Metal phosphinate compound
   Aluminum diethyl phosphinate (Manufacturer: Clariant, Product Name: OP 1230)
(C) Phosphorus nitrogen-based flame retardant
   Melamine polyphosphate (Manufacturer: JLS, Product Name: PNA350)
(D) Bromine-based flame retardant
   Tetrabromo bisphenol-A bis(2,3-dibromopropyl ether) (Manufacturer: Suzuhiro Chemical, Product Name: FCP-680G)
(E) Phosphorus-based flame retardant
   Bisphenol-A diphosphate (Manufacturer: Daihachi, Product Name: CR-741)

### Examples 1 to 7 and Comparative Examples 1 to 9

The above components were mixed in amounts as listed in Tables 1 and 2, and subjected to extrusion at 200°C, thereby preparing pellets. Here, extrusion was performed using a twin-screw extruder (L/D=36, Φ: 45 mm) and the prepared pellets were dried at 80°C for 4 hours or more and injection-molded in a 6 oz. injection molding machine (molding temperature: 260°C, mold temperature: 60°C), thereby preparing specimens. The specimens were evaluated as to the following properties by the following method, and results are shown in Tables 1 and 2.

### Property Measurement

(1) Flame retardancy: Flame retardancy was measured on a 1.5 mm thick injection-molded specimen in accordance with the UL-94 vertical test method.
(2) Glow wire ignitability temperature (GWIT) (unit: °C): GWIT was measured on a specimen having a size of 100 mm × 100 mm × 1.5 mm in accordance with UL746A.
(3) Glow wire flammability index (GWFI) (unit: °C): GWFI was measured on a specimen having a size of 100 mm × 100 mm × 1.5 mm in accordance with UL746A.
(4) Halogen content (unit: ppm): Halogen content in a 15 mg specimen was measured by ion chromatography in accordance with KS C IEC 62321-3-2.
(5) Notched Izod impact strength (kgf cm/cm): Notched Izod impact strength was measured on a 6.4 mm thick specimen in accordance with ASTM D256.

**Table 1**

| | Example | | | | | | |
|---|---|---|---|---|---|---|---|
| | 1 | 2 | 3 | 4 | 5 | 6 | 7 |
| (A1) (parts by weight) | 100 | 100 | 100 | 100 | 100 | 100 | 100 |
| (A2) (parts by weight) | - | - | - | - | - | - | - |
| (A3) (parts by weight) | - | - | - | - | - | - | - |
| (B) (parts by weight) | 0.5 | 1 | 4 | 1 | 1.5 | 1 | 1 |
| (C) (parts by weight) | 2 | 2 | 1.5 | 1 | 4 | 1 | 2 |
| (D) (parts by weight) | 0.1 | 0.1 | 0.1 | 0.05 | 0.1 | 0.05 | 0.13 |
| (E) (parts by weight) | - | - | - | - | - | - | - |
| Flame retardancy | V-2 | V-2 | V-2 | V-2 | V-2 | V-2 | V-2 |
| GWIT (°C) | 750 | 775 | 775 | 750 | 775 | 750 | 775 |
| GWFI (°C) | 900 | 960 | 960 | 900 | 960 | 900 | 960 |
| Halogen content (ppm) | 650 | 650 | 630 | 330 | 630 | 330 | 845 |
| Notched Izod impact strength (kgf·cm/cm) | 10 | 10 | 8 | 12 | 8 | 12 | 10 |

**Table 2**

| | Comparative Example | | | | | | | | |
|---|---|---|---|---|---|---|---|---|---|
| | 1 | 2 | 3 | 4 | 5 | 6 | 7 | 8 | 9 |
| (A1) (parts by weight) | - | - | 100 | 100 | 100 | 100 | 100 | 100 | 100 |
| (A2) (parts by weight) | 100 | - | - | - | - | - | - | - | - |
| (A3) (parts by weight) | - | 100 | - | - | - | - | - | - | - |
| (B) (parts by weight) | 1 | 1 | 0.2 | 8 | 1 | 1 | 1 | 1 | 1 |
| (C) (parts by weight) | 2 | 2 | 2 | 2 | 0.2 | 8 | 2 | 2 | - |
| (D) (parts by weight) | 0.1 | 0.1 | 0.1 | 0.1 | 0.1 | 0.1 | - | 1 | 0.1 |
| (E) (parts by weight) | - | - | - | - | - | - | - | - | 2 |
| Flame retardancy | V-2 | Fail | Fail | V-2 | Fail | Fail | Fail | V-2 | Fail |
| GWIT (°C) | 725 | 725 | 725 | 750 | 725 | 700 | 750 | 750 | 700 |
| GWFI (°C) | 800 | 850 | 850 | 960 | 850 | 800 | 900 | 960 | 800 |
| Halogen content (ppm) | 650 | 650 | 650 | 610 | 660 | 620 | 0 | 6,450 | 650 |
| Notched Izod impact strength (kgf·cm/cm) | 2 | 6 | 10 | 3 | 10 | 3 | 10 | 6 | 10 |

From the above results, it could be seen that the thermoplastic resin composition according to the present invention exhibited good properties in terms of flame retardancy (UL94, GWIT, GWFR) and impact resistance (notched Izod impact strength), and had a halogen content of 900 ppm or less satisfying the RoHS international environment regulation.

Conversely, it could be seen that the thermoplastic resin composition prepared using the polypropylene resin (A2) instead of the ethylene-propylene block copolymer (A1) (Comparative Example 1) suffered from deterioration in flame retardancy and impact resistance; and the thermoplastic resin composition prepared using the ethylene-propylene random copolymer (A3) instead of the ethylene-propylene block copolymer (A1) (Comparative Example 2) suffered from deterioration in flame retardancy and impact resistance. In addition, it could be seen that the thermoplastic resin composition prepared using an insufficient amount of the metal phosphinate compound (Comparative Example 3) suffered from deterioration in flame retardancy; the thermoplastic resin composition prepared using an excess of the metal phosphinate compound (Comparative Example 4) suffered from deterioration in impact resistance; the thermoplastic resin composition prepared using an insufficient amount of the phosphorus nitrogen-based flame retardant (Comparative Example 5) suffered from deterioration in flame retardancy; the thermoplastic resin composition prepared using an excess of the phosphorus nitrogen-based flame retardant (Comparative Example 6) suffered from deterioration in flame retardancy and impact resistance; the thermoplastic resin composition free from the bromine-based flame retardant (Comparative Example 7) suffered from deterioration in flame retardancy; and the thermoplastic resin composition prepared using an excess of the bromine-based flame retardant (Comparative Example 8) suffered from significant increase in halogen content and failed to satisfy the international environment regulation. Further, it could be seen that the thermoplastic resin composition prepared using the phosphorus flame retardant instead of the phosphorus nitrogen-based flame retardant (C) (Comparative Example 9) suffered from deterioration in flame retardancy and the like.

## Claims

1. A thermoplastic resin composition comprising:
100 parts by weight of an ethylene-propylene block copolymer:
0.3 parts by weight to 5 parts by weight of a metal phosphinate compound;
0.5 parts by weight to 5 parts by weight of a phosphorus nitrogen-based flame retardant; and
0.01 parts by weight to 0.2 parts by weight of a bromine-based flame retardant.

2. The thermoplastic resin composition according to claim 1, wherein the ethylene-propylene block copolymer comprises 20% wt% to 60 wt% of ethylene and 40 wt% to 80 wt% of propylene.

3. The thermoplastic resin composition according to claim 1 or 2, wherein the ethylene-propylene block copolymer comprises 60 wt% to 95 wt% of a propylene homopolymer and 5 wt% to 40 wt% of a rubbery ethylene-propylene copolymer.

4. The thermoplastic resin composition according to any one of claims 1 to 3, wherein the ethylene-propylene block copolymer has a melt-flow index (MI) of 5 g/10 min to 100 g/10 min, as measured under conditions of 230°C and 2.16 kgf in accordance with ASTM D1238.

5. The thermoplastic resin composition according to any one of claims 1 to 4, wherein the metal phosphinate compound is represented by Formula 1: 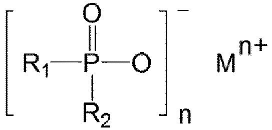 where R₁ and R₂ are each independently a C₁ to C₆ alkyl group or a C₆ to C₁₂ aryl group; M is Al, Zn, Mg, Ca, Sb, Sn, Ge, Ti, Fe, Zr, Ce, Bi, Sr, Mn, Li, or Na; and n is an integer of 1 to 4.

6. The thermoplastic resin composition according to any one of claims 1 to 5, wherein the phosphorus nitrogen-based flame retardant comprises at least one of melamine polyphosphate, melam pyrophosphate, melem pyrophosphate, melon pyrophosphate, melamine pyrophosphate, dimelamine pyrophosphate, melamine polyphosphate, melam polyphosphate, melon polyphosphate, melem polyphosphate, mixed multi-salts thereof, ammonium hydrogen phosphate, ammonium dihydrogen phosphate, and ammonium polyphosphate.

7. The thermoplastic resin composition according to any one of claims 1 to 6, wherein the bromine-based flame retardant comprises at least one of tetrabromo bisphenol-A bis(2,3-dibromopropyl ether), tetrabromo bisphenol-A, decabromodiphenyl oxide, decabrominated diphenyl ethane, 1,2-bis(2,4,6-tribromophenyl)ethane, octabromo-1,3,3-trimethyl-1-phenylindane, and 2,4,6-tris(2,4,6-tribromophenoxy)-1,3,5-triazine.

8. The thermoplastic resin composition according to any one of claims 1 to 7, wherein the metal phosphinate compound and the phosphorus nitrogen-based flame retardant are present in a weight ratio of 1:0.2 to 1:5.

9. The thermoplastic resin composition according to any one of claims 1 to 8, wherein the metal phosphinate compound and the bromine-based flame retardant are present in a weight ratio of 1:0.01 to 1:0.6.

10. The thermoplastic resin composition according to any one of claims 1 to 9, wherein the phosphorus nitrogen-based flame retardant and the bromine-based flame retardant are present in a weight ratio of 1:0.01 to 1:0.4

11. The thermoplastic resin composition according to any one of claims 1 to 10, wherein the thermoplastic resin composition has a flame retardancy of V-2, as measured on a 1.5 mm thick injection-molded specimen in accordance with a UL-94 vertical test method.

12. The thermoplastic resin composition according to any one of claims 1 to 11, wherein the thermoplastic resin composition has a glow wire ignitability temperature (GWIT) of 730°C or more and a glow wire flammability index (GWFI) of 870°C or more, as measured on a specimen having a size of 100 mm × 100 mm × 1.5 mm in accordance with UL746A.

13. The thermoplastic resin composition according to any one of claims 1 to 12, wherein the thermoplastic resin composition has a halogen content of 100 ppm to 900 ppm in a 15 mg specimen, as measured by ion chromatography in accordance with KS C IEC 62321-3-2.

14. The thermoplastic resin composition according to any one of claims 1 to 13, wherein the thermoplastic resin composition has a notched Izod impact strength of 7 kgf cm/cm to 30 kgf·cm/cm, as measured on a 6.4 mm thick specimen in accordance with ASTM D256.

15. A molded product produced from the thermoplastic resin composition according to any one of claims 1 to 14.

## Patentansprüche

1. Thermoplastische Harzzusammensetzung, umfassend:
100 Gewichtsteile eines Ethylen-Propylenblockcopolymers;
0,3 Gewichtsteile bis 5 Gewichtsteile einer Metallphosphinatverbindung;
0,5 Gewichtsteile bis 5 Gewichtsteile eines Flammschutzmittels auf Phosphor-Stickstoffbasis; und
0,01 Gewichtsteile bis 0,2 Gewichtsteile eines Flammschutzmittels auf Brombasis.

2. Thermoplastische Harzzusammensetzung nach Anspruch 1, wobei das Ethylen-Propylenblockcopolymer 20 Gew.-% bis 60 Gew.-% Ethylen und 40 Gew.-% bis 80 Gew.-% Propylen umfasst.

3. Thermoplastische Harzzusammensetzung nach Anspruch 1 oder 2, wobei das Ethylen-Propylenblockcopolymer 60 Gew.-% bis 95 Gew.-% eines Propylenhomopolymers und 5 Gew.-% bis 40 Gew.-% eines kautschukartigen Ethylen-Propylencopolymers umfasst.

4. Thermoplastische Harzzusammensetzung nach einem der Ansprüche 1 bis 3, wobei das Ethylen-Propylenblockcopolymer einen Schmelzflussindex (MI) von 5 g/10 min bis 100 g/10 min aufweist, gemessen unter Bedingungen von 230 °C und 2,16 kgf gemäß ASTM D1238.

5. Thermoplastische Harzzusammensetzung nach einem der Ansprüche 1 bis 4, wobei die Metallphosphinatverbindung durch die Formel 1 dargestellt ist: 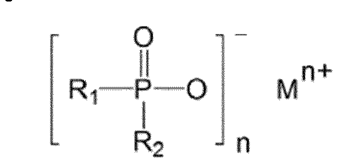 wobei R₁ und R₂ jeweils unabhängig eine C₁- bis C₆-Alkylgruppe oder eine C₆- bis C₁₂-Arylgruppe sind; M AI, Zn, Mg, Ca, Sb, Sn, Ge, Ti, Fe, Zr, Ce, Bi, Sr, Mn, Li oder Na ist; und n eine ganze Zahl von 1 bis 4 ist.

6. Thermoplastische Harzzusammensetzung nach einem der Ansprüche 1 bis 5, wobei das Flammschutzmittel auf Phosphor-Stickstoffbasis mindestens eines von Melaminpolyphosphat, Melampyrophosphat, Melemprophosphat, Melonpyrophosphat, Melaminpyrophosphat, Dimelaminpyrophosphat, Melaminpolyphosphat, Melampolyphosphat, Melonpolyphosphat, Melempolyphosphat, gemischte Multisalze davon, Ammoniumhydrogenphosphat, Ammoniumhihydrogenphosphat und Ammoniumholyphosphat umfasst.

7. Thermoplastische Harzzusammensetzung nach einem der Ansprüche 1 bis 6, wobei das Flammschutzmittel auf Brombasis mindestens eines von Tetrabrombisphenol-A bis(2,3-dibrompropylether), Tetrabrombisphenol-A, Decabromdiphenyloxid, decabromiertes Diphenylethan, 1,2-Bis(2,4,6-tribromphenyl)ethan, Octabrom-1,3,3-trimethy1-1-phenylindan und 2,4,6-Tris(2,4,6-tribromphenoxy)-1,3,5-triazin umfasst.

8. Thermoplastische Harzzusammensetzung nach einem der Ansprüche 1 bis 7, wobei die Metallphosphinatverbindung und das Flammschutzmittel auf Phosphor-Stickstoffbasis in einem Gewichtsverhältnis von 1:0,2 bis 1:5 vorhanden sind.

9. Thermoplastische Harzzusammensetzung nach einem der Ansprüche 1 bis 8, wobei die Metallphosphinatverbindung und das Flammschutzmittel auf Brombasis in einem Gewichtsverhältnis von 1:0,01 bis 1:0,6 vorhanden sind.

10. Thermoplastische Harzzusammensetzung nach einem der Ansprüche 1 bis 9, wobei das Flammschutzmittel auf Phosphor-Stickstoffbasis und das Flammschutzmittel auf Brombasis in einem Gewichtsverhältnis von 1:0,01 bis 1:0,4 vorhanden sind.

11. Thermoplastische Harzzusammensetzung nach einem der Ansprüche 1 bis 10, wobei die thermoplastische Harzzusammensetzung einen Flammschutz von V-2 aufweist, gemessen an einer 1,5 mm dicken, durch Injizieren geformten Probe gemäß einem UL-94-Vertikaltestverfahren.

12. Thermoplastische Harzzusammensetzung nach einem der Ansprüche 1 bis 11, wobei die thermoplastische Harzzusammensetzung eine Glühdrahtzündfähigkeitstemperatur (GWIT) von 730 °C oder mehr und einen Glühdrahtentflammbarkeitsindex (GWFI) von 870 °C oder mehr aufweist, gemessen an einer Probe mit einer Größe von 100 mm × 100 mm × 1,5 mm gemäß UL746A.

13. Thermoplastische Harzzusammensetzung nach einem der Ansprüche 1 bis 12, wobei die thermoplastische Harzzusammensetzung einen Halogeninhalt von 100 ppm bis 900 ppm in einer 15-mg-Probe aufweist, gemessen durch lonenchromatographie gemäß KS C IEC 62321-3-2.

14. Thermoplastische Harzzusammensetzung nach einem der Ansprüche 1 bis 13, wobei die thermoplastische Harzzusammensetzung eine Kerbschlagzähigkeit nach Izod von 7 kgf cm/cm bis 30 kgf cm/cm aufweist, gemessen an einer 6,4 mm dicken Probe gemäß ASTM D256.

15. Geformtes Produkt, hergestellt aus der thermoplastischen Harzzusammensetzung nach einem der Ansprüche 1 bis 14.

## Revendications

1. Composition de résine thermoplastique comprenant :
100 parties en poids d'un copolymère séquencé d'éthylène-propylène ;
0,3 partie en poids à 5 parties en poids d'un composé de phosphinate métallique ;
0,5 partie en poids à 5 parties en poids d'un agent ignifuge à base de phosphore-azote ; et
0,01 partie en poids à 0,2 partie en poids d'un agent ignifuge à base de brome.

2. Composition de résine thermoplastique selon la revendication 1, dans laquelle le copolymère séquencé d'éthylène-propylène comprend 20% en poids à 60% en poids d'éthylène et 40% en poids à 80% en poids de propylène.

3. Composition de résine thermoplastique selon la revendication 1 ou 2, dans laquelle le copolymère séquencé d'éthylène-propylène comprend 60% en poids à 95% en poids d'un homopolymère de propylène et 5% en poids à 40% en poids d'un copolymère d'éthylène-propylène caoutchouteux.

4. Composition de résine thermoplastique selon l'une quelconque des revendications 1 à 3, dans laquelle le copolymère séquencé d'éthylène-propylène a un indice de fluidité (MI) allant de 5 g/10 min à 100 g/10 min, tel que mesuré dans des conditions de 230°C et 2,16 kgf conformément à la norme ASTM D1238.

5. Composition de résine thermoplastique selon l'une quelconque des revendications 1 à 4, dans laquelle le composé de phosphinate métallique est représenté par la formule 1 : 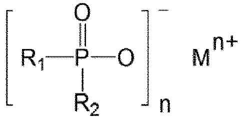 où R₁ et R₂ sont chacun indépendamment un groupe alkyle en C₁ à C₆ ou un groupe aryle en C₆ à C₁₂ ; M est Al, Zn, Mg, Ca, Sb, Sn, Ge, Ti, Fe, Zr, Ce, Bi, Sr, Mn, Li ou Na ; et n est un nombre entier allant de 1 à 4.

6. Composition de résine thermoplastique selon l'une quelconque des revendications 1 à 5, dans laquelle l'agent ignifuge à base de phosphore-azote comprend au moins l'un parmi un polyphosphate de mélamine, un pyrophosphate de mélam, un pyrophosphate de mélem, un pyrophosphate de melon, un pyrophosphate de mélamine, un pyrophosphate de dimélamine, un polyphosphate de mélamine, un polyphosphate de mélam, un polyphosphate de melon, un polyphosphate de mélem, des multi-sels mixtes de ceux-ci, un hydrogénophosphate d'ammonium, un dihydrogénophosphate d'ammonium et un polyphosphate d'ammonium.

7. Composition de résine thermoplastique selon l'une quelconque des revendications 1 à 6, dans laquelle l'agent ignifuge à base de brome comprend au moins l'un parmi le tétrabromo bisphénol-A bis(2,3-dibromopropyl éther), le tétrabromo bisphénol-A, l'oxyde de décabromodiphényle, le diphényléthane décabromé, le 1,2-bis(2,4,6-tribromophényl)éthane, l'octabromo-1,3,3-triméthyl-1-phénylindane et la 2,4,6-tris(2,4,6-tribromophénoxy)-1,3,5-triazine.

8. Composition de résine thermoplastique selon l'une quelconque des revendications 1 à 7, dans laquelle le composé de phosphinate métallique et l'agent ignifuge à base de phosphore-azote sont présents dans un rapport pondéral de 1 : 0,2 à 1 : 5.

9. Composition de résine thermoplastique selon l'une quelconque des revendications 1 à 8, dans laquelle le composé de phosphinate métallique et l'agent ignifuge à base de brome sont présents dans un rapport pondéral de 1 : 0,01 à 1 : 0,6.

10. Composition de résine thermoplastique selon l'une quelconque des revendications 1 à 9, dans laquelle l'agent ignifuge à base de phosphore-azote et l'agent ignifuge à base de brome sont présents dans un rapport pondéral de 1 : 0,01 à 1 : 0,4.

11. Composition de résine thermoplastique selon l'une quelconque des revendications 1 à 10, dans laquelle la composition de résine thermoplastique a une ininflammabilité de V-2, telle que mesurée sur un spécimen moulé par injection de 1,5 mm d'épaisseur conformément à une méthode de test vertical UL-94.

12. Composition de résine thermoplastique selon l'une quelconque des revendications 1 à 11, dans laquelle la composition de résine thermoplastique a une température d'inflammabilité au fil incandescent (GWIT) supérieure ou égale à 730°C et un indice d'inflammabilité au fil incandescent (GWFI) supérieur ou égal à 870°C, tels que mesurés sur un spécimen ayant une taille de 100 mm × 100 mm × 1,5 mm conformément à UL746A.

13. Composition de résine thermoplastique selon l'une quelconque des revendications 1 à 12, dans laquelle la composition de résine thermoplastique a une teneur en halogène allant de 100 ppm à 900 ppm dans un spécimen de 15 mg, telle que mesurée par chromatographie ionique conformément à KS C IEC 62321-3-2.

14. Composition de résine thermoplastique selon l'une quelconque des revendications 1 à 13, dans laquelle la composition de résine thermoplastique a une résistance aux chocs Izod sur barreau entaillé allant de 7 kgf·cm/cm à 30 kgfcm/cm, telle que mesurée sur un spécimen de 6,4 mm d'épaisseur conformément à la norme ASTM D256.

15. Produit moulé fabriqué à partir de la composition de résine thermoplastique selon l'une quelconque des revendications 1 à 14.
